# EUROPÄISCHE PATENTSCHRIFT

(11) **EP 3 530 102 B1**
(45) Veröffentlichungstag und Bekanntmachung des Hinweises auf die Patenterteilung: **08.02.2023**
(21) Anmeldenummer: 18211604.6
(22) Anmeldetag: 11.12.2018
(51) Int. Cl.: A01D 43/08

(54) **SELBSTFAHRENDER FELDHÄCKSLER**
SELF-PROPELLED CHAFF CUTTER
RÉCOLTEUSE-HACHEUSE-CHARGEUSE DE FOURRAGE AUTOMOTRICE

(30) Priorität: 26.02.2018 DE 102018104286
(43) Veröffentlichungstag der Anmeldung: 28.08.2019
(73) Patentinhaber: CLAAS Selbstfahrende Erntemaschinen GmbH, 33428 Harsewinkel (DE)
(72) Erfinder: Heitmann, Christoph, 48231 Warendorf (DE); Bönig Dr., Ingo, 33330 Gütersloh (DE); Grove, Carsten, 48361 Beelen (DE); Kirchbeck, Alexander, 48137 Drensteinfurt (DE); Kriebel, Bastian, 48155 Münster (DE)

(56) Entgegenhaltungen:
- EP-A1- 1 847 169
- EP-A1- 2 361 495
- EP-A2- 1 754 407
- EP-B1- 2 132 974

## Beschreibung

Die vorliegende Erfindung betrifft einen selbstfahrenden Feldhäcksler gemäß dem Oberbegriff des Anspruches 1.

Selbstfahrende Feldhäcksler dienen der Ernte und der Zerkleinerung von Erntegut, welches unter anderem als Futtermittel oder für Biogasanlagen zum Einsatz kommt. Hierzu wird das zerkleinerte bzw. gehäckselte Erntegut in Silos aufgeschichtet und von einem oder mehreren Verdichtungsfahrzeugen verdichtet. Der Verdichtung des Ernteguts auf dem Silo kommt vor dem Hintergrund einer verlustarmen Futtermittelkonservierung eine besondere Bedeutung zu, da die Lagerungsdichte die Haltbarkeit der Silage am geöffneten Silo maßgeblich bestimmt. Einen besonderen Einfluss auf die Verdichtbarkeit von zerkleinertem Erntegut haben die Schnittlänge sowie der relative Trockenmassegehalt in der bearbeiteten Frischmasse.

Während die relative Trockenmasse ein Erntegutparameter ist, der während des Ernteprozesses nicht beeinflussbar ist, stellt die Einstellung der Schnittlänge eine Einflussgröße dar, die von einer Bedienperson des Feldhäckslers vor und während des Ernteprozesses vorgegeben bzw. angepasst wird. Die Einstellung der Schnittlänge beeinflusst maßgeblich die Verdichtbarkeit im Silo als auch die durch den Feldhäcksler erzielbare Flächenleistung. Entsprechend ist es von der Expertise der Bedienperson abhängig, ob die von der Bedienperson für den jeweiligen Ernteprozess gewählten Betriebsparameter, unter anderem die Einstellung Schnittlänge, zu dem gewünschten Ernteziel, einer an die Erntegutparameter angepassten optimalen Verdichtbarkeit auf dem Silo führen.

Aus der EP 2 132 974 B1 ist ein Feldhäcksler mit einer Steuereinrichtung bekannt, welche zur Beeinflussung von einstellbaren Betriebsparametern von Arbeitsorganen des Feldhäckslers eingerichtet ist. Mittels der Steuereinrichtung wird anhand von Erntegut- und Betriebsparametern und einem Sollkriterium, welches einer angestrebten Verdichtung eines zerkleinerten Erntegutes auf dem Silo entspricht, eine Prognose über die Erreichbarkeit eines am Ende der Ernteprozesskette stehenden Ist-Ernteziels abgeleitet. Die Prognose dient dazu, die Bedienperson darüber zu informieren, ob aufgrund der gewählten Betriebsparameter das gewünschte Ernteziel erreichbar ist. Die Prognose dient des Weiteren dazu, die Bedienperson dazu zu veranlassen, nötigenfalls Betriebsparameteranpassungen vorzunehmen, wenn die Prognose nicht mit dem gewünschten Ernteziel korrespondiert.

Aus der EP 1 847 169 A1 ist ein Verfahren zur Einstellung einer Schnittlänge einer Häckselvorrichtung eines Feldhäckslers in Abhängigkeit von einem ermittelten Rückdehnungsverhalten des Erntegutes bekannt. Zur Bestimmung des Rückdehnungsverhaltens umfasst der Feldhäcksler eine Probenentnahmevorrichtung, welche Erntegut aus dem bearbeiteten Gutstrom zur Analyse entnimmt.

Ausgehend von dem vorstehend genannten Stand der Technik besteht die Aufgabe der vorliegenden Erfindung darin, einen aus dem Stand der Technik bekannten Feldhäcksler so weiterzuentwickeln, dass mit geringem Aufwand eine umfassende und vorteilhafte Ansteuerung des Zusammenwirkens von Einzugsvorrichtung und Häckselvorrichtung bei geringer Beanspruchung einer Bedienperson möglich ist.

Diese Aufgabe wird erfindungsgemäß durch einen selbstfahrenden Feldhäcksler gemäß den Merkmalen des Anspruches 1 gelöst.

Vorteilhafte Weiterbildungen sind Gegenstand der Unteransprüche.

Gemäß dem Anspruch 1 ist ein selbstfahrender Feldhäcksler mit einer Einzugsvorrichtung, einer Häckselvorrichtung, umfassend eine mit Häckselmessern bestückte Häckseltrommel und eine Gegenschneide zum Zerkleinern von Erntegut, einem Fahrantrieb sowie einem Fahrerassistenzsystem zur Ansteuerung zumindest der Häckselvorrichtung, vorgesehen, wobei das Fahrerassistenzsystem einen Speicher zum Hinterlegen von Daten und eine Rechenvorrichtung zur Verarbeitung der in dem Speicher hinterlegten Daten umfasst. Um eine umfassende und vorteilhafte Ansteuerung des Zusammenwirkens von Einzugsvorrichtung und Häckselvorrichtung zu bewirken, bildet die Häckselvorrichtung zusammen mit dem Fahrerassistenzsystem einen Häckselautomaten, indem die Rechenvorrichtung dazu eingerichtet ist, eine Verdichtung des zerkleinerten Erntegutes anhand von Erntegutparametern während eines Ernteprozesses fortlaufend zu bestimmen, um eine zu adaptierende Schnittlänge zur Beibehaltung einer nahezu konstanten Verdichtbarkeit autonom zu ermitteln und vorzugeben. Das Fahrerassistenzsystem ist mit seinem Speicher zum Hinterlegen von Daten und seiner Rechenvorrichtung dazu eingerichtet, autonom die erforderlichen Einstellungen von Betriebsparametern der Einzugsvorrichtung und der Häckselvorrichtung zu bestimmen und vorzugeben, durch die die Schnittlänge adaptiert wird, um eine nahezu konstante Verdichtbarkeit von Erntegut beizubehalten.

Hierzu kann der Verdichtung mindestens ein Kennlinienfeld zugeordnet sein, wobei die Verdichtung als Ausgangsgröße des mindestens einen Kennlinienfeldes definiert ist. Das mindestens eine im Speicher des Fahrerassistenzsystems hinterlegte Kennlinienfeld ermöglicht es, komplexe funktionale Zusammenhänge mit geringem rechnerischem Aufwand abzubilden. Unter Verwendung des mindestens einen Kennlinienfeldes kann für zumindest einen Erntegutparameter und die Schnittlänge eine nahezu konstante Verdichtbarkeit durch den Häckselautomaten autonom bestimmt werden. Die Beibehaltung einer nahezu konstanten Verdichtbarkeit erfolgt mittels des mindestens einen Kennlinienfeldes durch die zyklische Adaption der Schnittlänge an einen sich ändernden Erntegutparameter.

Dabei können ein Parameter "Schnittlänge" und ein Parameter "relativer Trockenmassegehalt" die Eingangsgrößen für das mindestens eine Kennlinienfeld sein. Mittels des mindestens einen Kennlinienfeldes sind für die Schnittlänge relevante funktionale Zusammenhänge der Arbeitsorgane des Feldhäckslers darstellbar. Denkbar ist es, darüber hinaus auch weitere Eingangsgrößen vorzusehen, welche die Verdichtung beeinflussen können. Beispielsweise Schwankungen in der aufgenommenen Erntegutmenge.

Bevorzugt kann die Rechenvorrichtung dazu eingerichtet sein, das mindestens eine Kennlinienfeld im laufenden Erntebetrieb zyklisch auf einen aktuellen Ernteprozesszustand abzugleichen. Unter dem Begriff zyklisch ist eine fortlaufende, zeitlich getaktete Durchführung der Ermittlung eines aktuellen Ernteprozesszustands zu verstehen, wobei die zeitliche Taktung variabel sein kann. Dabei kann es für die Umsetzung eines solchen Abgleichs vorgesehen sein, dass mehrere Punkte innerhalb des Kennfeldes mittels Sensoren nachgemessen werden. Eine Abweichung der gemessenen Punkte von den dazugehörigen Punkten des aktuell zugrunde gelegten Kennlinienfeldes führt zu einer entsprechenden Anpassung des mindestens einen Kennlinienfeldes.

Gemäß einer Weiterbildung kann eine Ziel-Schnittlänge in Abhängigkeit von einem Erntegutparameter mittels einer Ein-/Ausgabevorrichtung vorgebbar sein. Einer Bedienperson ermöglicht diese Weiterbildung eine Festsetzung einer Erntezielvorgabe, beispielsweise durch Vorgabe der Ziel-Schnittlänge in Abhängigkeit vom relativen Trockenmassegehalt. Darüber hinaus kann vorgesehen sein, dass mittels der Ein-/Ausgabevorrichtung eine relative oder absolute Abweichung der Schnittlänge von der Ziel-Schnittlänge durch die Bedienperson einstellbar ist.

Vorzugsweise kann die Schnittlänge in Abhängigkeit von einer aktuellen Schichthöhe in einem Silo anpassbar sein. Mit zunehmender Schichthöhe erhöht sich aufgrund des Eigengewichts des Erntegutes der Druck auf die unteren Erntegutschichten, so dass die unteren Schichten in dem Silo bei gleichem Trockenmassegehalt eine größere Schnittlänge aufweisen können als obere Schichten.

Insbesondere können in dem Speicher mehrere Ernteprozessstrategien auswählbar hinterlegt sein und die Rechenvorrichtung dazu eingerichtet sein, zur Umsetzung der jeweils ausgewählten Ernteprozessstrategie mindestens einen die Schnittlänge beeinflussenden Betriebsparameter, Einzugsgeschwindigkeit der Einzugsvorrichtung, Drehgeschwindigkeit der Häckselvorrichtung oder Fahrgeschwindigkeit des Fahrantriebs, autonom zu ermitteln und einem jeweiligen mit dem Betriebsparameter korrespondierenden Arbeitsaggregat vorzugeben.

Weiterhin kann der Häckselvorrichtung eine Nachbearbeitungsvorrichtung nachgeordnet sein, die gemäß einer auswählbaren Ernteprozessstrategie betreibbar ist. Die Nachbearbeitungsvorrichtung weist ein angetriebenes Walzenpaar mit einer profilierten Oberfläche auf, welche zueinander beabstandet im Gutfluss durch den Feldhäcksler angeordnet sind. Der Abstand zwischen den Walzen sowie eine zwischen den Walzen bestehende Drehzahldifferenz sind veränderbar. Gemäß dieser Weiterbildung steht das Aufschließen von Maiskörnern im Vordergrund. Der Grad des Aufschließens des Korns bestimmt, welcher Energiegehalt zu einem späteren Zeitpunkt bei einem Einsatz als Futtermittel oder im Fermenter einer Biogasanlage verfügbar ist. Darüber hinaus trägt die Nachbearbeitungsvorrichtung zu einer Zerfaserung des Erntegutes bei. Letzteres beeinflusst die Verdichtbarkeit des Erntegutes in dem Silo. Dabei ist für den Grad des Aufschließens der Körner neben der Drehzahldifferenz der Walzen der Abstand zwischen diesen maßgeblich. Hierbei führt eine Verringerung des Walzenabstandes zu einer erhöhten Leistungsaufnahme der Nachbearbeitungsvorrichtung, d.h. zu einem erhöhten Kraftstoffverbrauch.

Die auswählbaren Ernteprozessstrategien sind jeweils auf eine Zielvorgabe der Einstellung oder der Optimierung mindestens eines Ernteprozessparameters, nämlich Verdichtbarkeit, Kornaufschluss oder Flächenleistung respektive Kraftstoffverbrauch, durch eine entsprechende Vorgabe des mindestens einen die Schnittlänge oder den Kornaufschluss beeinflussenden Betriebsparameters gerichtet. Dabei stehen sich die Ernteprozessparameter Verdichtbarkeit bzw. Kornaufschluss und Flächenleistung jeweils konträr gegenüber.

Gemäß einer bevorzugten Weiterbildung kann eine Ernteprozessstrategie durch einen anderen am Ernteprozess beteiligten Prozessteilnehmer vorgebbar und an die Rechenvorrichtung des Feldhäckslers übertragbar sein. Hierdurch kann die Möglichkeit geschaffen werden, den Ernteprozess am Beginn einer Prozesskette durch einen am Ende der Prozesskette befindlichen Prozessteilnehmer zu beeinflussen. Die Verdichtung des Erntegutes auf dem Silo erfolgt durch ein oder mehrere Verdichtungsfahrzeuge, welche am Ende der Prozesskette stehen. Der Bedienperson eines Verdichtungsfahrzeugs ist die jeweilige Schichthöhe bekannt. Somit kann es sinnvoll sein, die Ernteprozessstrategie durch die Bedienperson des Verdichtungsfahrzeugs vorgeben bzw. verändern zu lassen. So kann zum Beginn des Aufschichtens und Verdichtens eine Ernteprozessstrategie vorgegeben werden, die eine größere Schnittlänge bzw. eine höhere Flächenleistung bei nahezu konstanter Verdichtbarkeit ermöglicht.

Hierzu kann der Häckselautomat eine erste Kennlinie konstanter Verdichtbarkeit verwenden, die von dem Fahrerassistenzsystem entsprechend vorgebbarer Randbedingungen, Erntegutparameter und Ziel-Schnittlänge, der Ernteprozessstrategie anhand des Kennlinienfeldes bestimmt wird. Mit zunehmender Schichthöhe ist es erforderlich, zur Erreichung einer nahezu konstanten Verdichtung innerhalb des Silos die Ernteprozessstrategie anzupassen. Dies kann durch die Bedienperson des Verdichtungsfahrzeugs veranlasst werden, indem eine entsprechende Anforderung an das Fahrerassistenzsystem des Feldhäckslers übermittelt wird. Die Bedienperson des Feldhäckslers wird durch eine Ein-/Ausgabevorrichtung über die geänderte Anforderung informiert.

Darüber hinaus kann diese Anforderung eine Bestätigung der Bedienperson des Feldhäckslers erfordern, was insbesondere dann sinnvoll ist, wenn ein den Feldhäcksler begleitendes Transportfahrzeug nur teilweise gefüllt ist. Somit kann die Bedienperson des Feldhäckslers die Anforderung erst dann quittieren, wenn ein Wechsel des Transportfahrzeugs erfolgt. Ein Flottenmanagementsystem, welches eine übergreifende Kommunikation der Prozessteilnehmer untereinander ermöglicht, bietet die Möglichkeit, die Bedienperson des Verdichtungsfahrzeugs darüber zu informieren, welches eintreffende Transportfahrzeug mit Erntegut beladen ist, welches gemäß der geänderten Ernteprozessstrategie von dem Feldhäcksler bearbeitet wurde. Entsprechend kann das mit höherer Verdichtbarkeit von dem Feldhäcksler bearbeitete Erntegut weiter oben in das Silo gebracht werden.

Die vorliegende Erfindung wird nachstehend anhand eines in den Zeichnungen dargestellten Ausführungsbeispieles näher erläutert.

Es zeigen:
- Fig. 1: eine schematische Darstellung eines Feldhäckslers in Seitenansicht;
- Fig. 2: eine schematische Darstellung des Aufbaus eines Fahrerassistenzsystems;
- Fig. 3: ein in einem Speicher des Fahrerassistenzsystems hinterlegtes Kennlinienfeld;
- Fig. 4: das Kennlinienfeld gemäß Fig. 3 mit einer durch das Fahrerassistenzsystem bestimmten Kennlinie konstanter Verdichtbarkeit;
- Fig. 5: das Kennlinienfeld gemäß Fig. 3, in welchem mehrere Kennlinien konstanter Verdichtbarkeit eingezeichnet sind;
- Fig. 6: eine schematische Visualisierung eines Silos mit unterschiedlichen Schichthöhen zerkleinerten Erntegutes auf einem Bildschirm einer Ein-/Ausgabevorrichtung des Fahrerassistenzsystems;
- Fig. 7: eine Menüoberfläche der Ein-/Ausgabevorrichtung mit mehreren Ernteprozessstrategien.

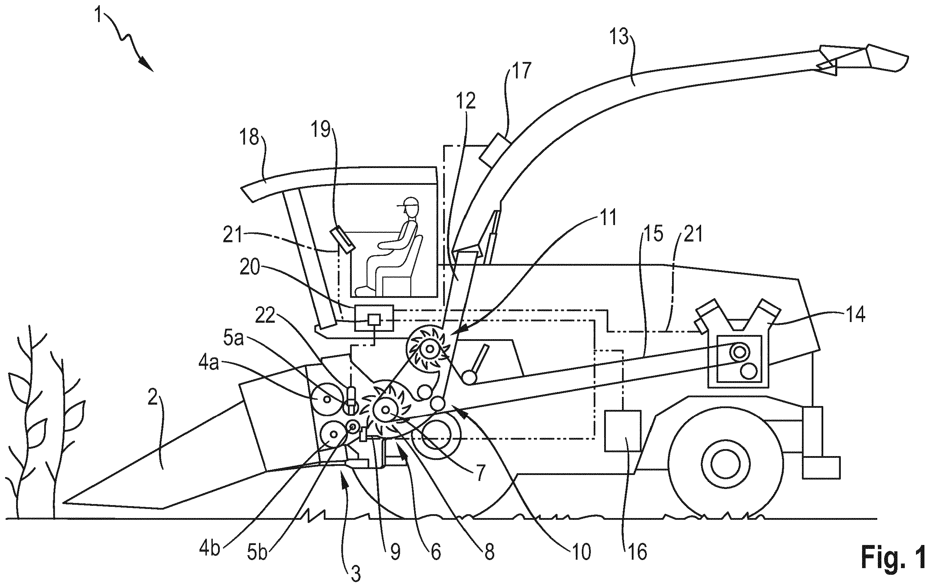

In Fig. 1 ist eine schematische Darstellung eines Feldhäckslers 1 in Seitenansicht gezeigt. Der Feldhäcksler 1 weist ein Vorsatzgerät 2 zum Ernten von, insbesondere stängeligem, Erntegut auf. Das von dem Vorsatzgerät 2 aufgenommene Erntegut wird einer Einzugsvorrichtung 3 zugeführt. Die Einzugsvorrichtung 3 umfasst zumindest ein erstes Paar Walzen 4a, 4b und ein zweites Paar Walzen 5a, 5b, die an einem Rahmen oder einem Gehäuse angeordnet sind. Die zumindest zwei Walzenpaare 4a, 4b und 5a, 5b dienen dem Einzug und Vorpressen des Erntegutes. Der Einzugsvorrichtung 3 ist eine Häckselvorrichtung 6 nachgeordnet. Die Häckselvorrichtung 6 umfasst eine mit Häckselmessern 8 bestückte, rotierend angetriebene Häckseltrommel 7. Zum Zerkleinern des in Form einer verdichteten Erntegutmatte zugeführten Erntegutes wirken die mit der Häckseltrommel 7 rotierenden Häckselmesser 8 mit einer ortsfest angeordneten Gegenschneide 9 zusammen. Der Abstand der Gegenschneide 9 relativ zum Hüllkreis der Häckselmesser 8 lässt sich ein- bzw. nachstellen. Ein möglichst geringer Abstand trägt zu einem reduzierten Kraftbedarf beim Schneiden und zu einer konstanten Schnittqualität bei.

Das aus der Häckselvorrichtung 6 austretende zerkleinerte Erntegut kann einer optional vorgesehenen Nachbearbeitungsvorrichtung 10 zugeführt werden. Die Nachbearbeitungsvorrichtung 10, auch als Konditioniereinrichtung oder Corncracker bezeichnet, dient dem Aufschließen von Maiskörnern, um die Verwertbarkeit bzw. Energieausbeute bei einem Einsatz als Futtermittel bzw. in einer Biogasanlage zu erhöhen. Derartige Nachbearbeitungsvorrichtungen 10 bestehen aus einem Walzenpaar, wobei die Walzen mit unterschiedlichen Drehzahlen angetrieben werden. Das Drehzahlverhältnis des Walzenpaares der Nachbearbeitungsvorrichtung 10 ist variierbar. Der Kornaufschluss wird insbesondere durch eine Spaltweite zwischen den beiden Walzen der Nachbearbeitungsvorrichtung 10 bestimmt. Je geringer die Spaltweite desto höher der Kornaufschluss. Die Spaltweite ist einstellbar. Die Nachbearbeitungsvorrichtung 10 ist bei Bedarf aus dem Gutflussweg des Feldhäckslers 1 entfernbar.

Von der Häckselvorrichtung 6 oder der optionalen Nachbearbeitungsvorrichtung 10 gelangt das zerkleinerte Erntegut zu einem Nachbeschleuniger 11, welcher das Erntegut durch einen Förderschacht 12 und einen sich daran anschließenden Auswurfkrümmer 13 an ein benachbart zu dem Feldhäcksler 1 fahrendes - nicht dargestelltes - Transportfahrzeug überlädt. Das Transportfahrzeug transportiert das bearbeitete Erntegut zu einem hier nicht dargestellten Silo, in welchem es durch ein oder mehrere Verdichtungsfahrzeuge verdichtet wird. An dem Auswurfkrümmer 13 ist ein Sensor 17 angeordnet, welcher zumindest zur Bestimmung des Feuchtigkeitsgehalts des zerkleinerten Erntegutes respektive der Trockenmasse eingerichtet ist. Der Sensor 17 kann als NIR-Sensor ausgeführt sein, welcher auch zur Detektion von Inhaltsstoffen wie Rohasche oder Rohproteingehalt des vorbeiströmenden Erntegutes eingerichtet ist.

Zum Antreiben des Feldhäckslers 1 ist eine als Verbrennungsmotor ausgebildete Antriebsvorrichtung 14 vorgesehen, die mittels eines Riementriebs 15 die Häckselvorrichtung 6, die Nachbearbeitungsvorrichtung 10 und den Nachbeschleuniger 11 antreibt. Das Vorsatzgerät 2 sowie die Einzugsvorrichtung 3 sind durch einen weiteren Antriebsstrang antreibbar, welcher mechanisch mit der Häckselvorrichtung 6 gekoppelt sein kann oder unabhängig von der Häckselvorrichtung 6 hydrostatisch betreibbar ist. Weiterhin ist ein, insbesondere hydrostatischer, Fahrantrieb 16 vorgesehen, mit welchem die Fahrgeschwindigkeit des Feldhäckslers 1 regelbar ist.

Der Feldhäcksler 1 weist eine Kabine 18 auf, in der eine Ein-/Ausgabevorrichtung 19 vorgesehen ist, welche einer Bedienperson des Feldhäckslers 1 zur Verfügung steht, um beispielsweise Betriebsparameter ein- und verstellen zu können und um die Bedienperson über aktuelle Betriebs- bzw. Erntebedingungen zu informieren. Die Ein-/Ausgabevorrichtung 19 steht durch ein Bussystem 21 mit einem Fahrerassistenzsystem 20 des Feldhäckslers 1 in Verbindung. Das Bussystem 21 verbindet darüber hinaus den Sensor 17 am Auswurfkrümmer 13 sowie einen Sensor 22 der Einzugsvorrichtung 3 und weitere - nicht dargestellte - Sensoren und Aktuatoren zur Überwachung und Einstellung von Vorsatzgerät 2, Einzugsvorrichtung 3, Häckselvorrichtung 6 sowie den Fahrantrieb 16 mit dem Fahrerassistenzsystem 20. Diese weiteren Sensoren und Aktuatoren sind hinreichend bekannt, so dass auf diese nicht näher eingegangen werden muss.

Um während des Ernteprozesses eine definierte Schnittlänge bzw. Häcksellänge des Erntegutes zu gewährleisten, die durch die Ein-/Ausgabevorrichtung 19 vorgebbar ist, wird auf dem Weg des Erntegutes durch den Feldhäcksler 1 laufend die Vortriebsgeschwindigkeit des jeweils nachfolgenden Arbeitsorgans gegenüber dem vorangehenden erhöht. Das bedeutet, dass die Walzenpaare 4a, 4b und 5a, 5b der Einzugsvorrichtung 3 mit einer geringeren Umfangsgeschwindigkeit angetrieben werden, als die Häckseltrommel 7 der Häckselvorrichtung 6. Die Veränderung der Antriebsgeschwindigkeit der Walzenpaare 4a, 4b und 5a, 5b der Einzugsvorrichtung 3 führt zu einer langsameren oder schnelleren Zuführung des von dem Vorsatzgerät 2 aufgenommenen Erntegutes in die Häckselvorrichtung 6, was entsprechend zu einer kürzeren oder längeren Schnittlänge führt.

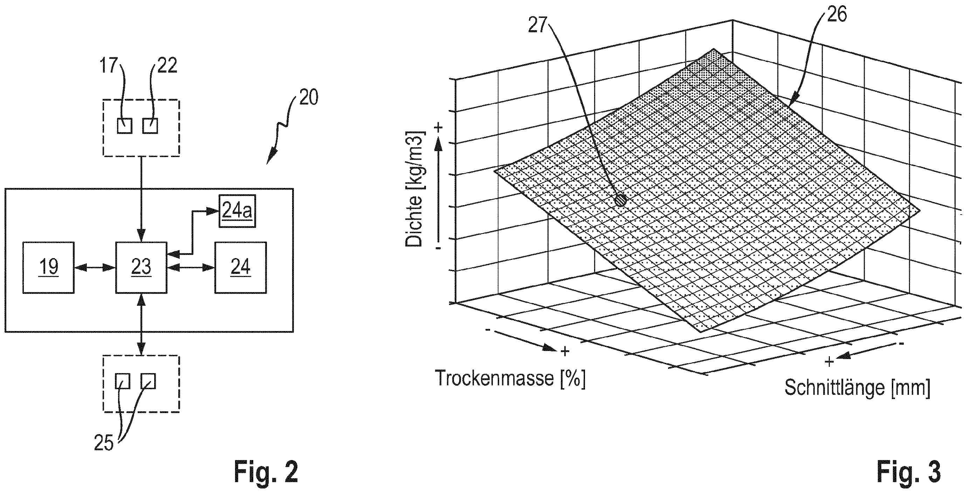

In Fig. 2 ist schematisch der Aufbau des Fahrerassistenzsystems 20 dargestellt. Das Fahrerassistenzsystem umfasst eine Rechenvorrichtung 23 und einen Speicher 24 zum Hinterlegen von Daten, wie die von den Sensoren 17 und 22 bereitgestellten Messsignale. Die in dem Speicher 24 hinterlegten Daten werden von der Rechenvorrichtung 23 verarbeitet. Die Rechenvorrichtung 23 steht durch das Bussystem 21 mit Aktuatoren 25 des Feldhäckslers 1 in Verbindung, um diese zu überwachen und anzusteuern.

Die Häckselvorrichtung 6 und das Fahrerassistenzsystem 20 bilden einen Häckselautomaten, indem die Rechenvorrichtung 23 dazu eingerichtet ist, eine Verdichtung des zerkleinerten Erntegutes anhand von sensorisch erfassten Erntegutparametern während eines Ernteprozesses fortlaufend zu bestimmen, um eine zu adaptierende Schnittlänge zur Beibehaltung einer nahezu konstanten Verdichtbarkeit autonom zu ermitteln und vorzugeben. Der Häckselautomat koordiniert alle für die Einhaltung einer nahezu konstanten Verdichtbarkeit des Erntegutes zusammenwirkenden Arbeitsaggregate, d.h. die Betriebsparameter zumindest der Einzugsvorrichtung 3 und der Häckselvorrichtung 6, ohne das es eines Eingriffs von außen durch eine Bedienperson bedarf. Dabei kann die Bedienperson durch die Ein-/Ausgabevorrichtung 19 eine gewünschte Ziel-Schnittlänge vorgeben, ohne über das zum Erreichen der Ziel-Schnittlänge erforderliche Wissen zu verfügen, welche Einstellungen der Betriebsparameter zumindest der Einzugsvorrichtung 3 und der Häckselvorrichtung 6 erforderlich sind. Darüber hinaus kann der Häckselautomat in entsprechender Weise auch die Betriebsparameter der Nachbehandlungsvorrichtung 10 koordinieren.

Die Verdichtung des Erntegutes resultiert aus dem relativen Trockenmassegehalt sowie der Schnittlänge. Mit zunehmenden Trockenmassegehalt muss die Schnittlänge verringert werden, um die Verdichtbarkeit auf dem Silo zu gewährleisten. Einhergehend mit der Verringerung der Schnittlänge sinkt die Flächenleistung und zugleich erhöht sich der Kraftstoffverbrauch. Um eine nahezu konstante Verdichtbarkeit des zerkleinerten Erntegutes in einem Silo über die Dauer eines Erntevorgangs hinweg sicherstellen zu können, ist in dem Speicher 24 mindestens ein Kennlinienfeld 26 hinterlegt, welches der Verdichtung zugeordnet ist. Die Erntegutparameter "Schnittlänge" und "relativer Trockenmassegehalt" sind die Eingangsgrößen für das mindestens eine Kennlinienfeld, während die in Abhängigkeit hiervon erreichbare Verdichtung, dargestellt als "Trockenmassedichte", als Ausgangsgröße des mindestens einen Kennlinienfeldes 26 definiert ist.

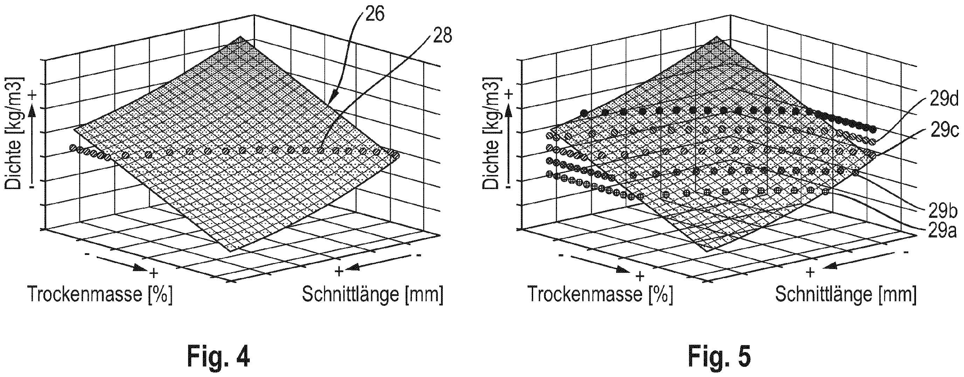

Fig. 3 zeigt ein in dem Speicher 24 hinterlegtes Kennlinienfeld 26, mit einem aufgrund einer bedienerseitigen Vorgabe von Schnittlänge und Trockenmassegehalt durch das Fahrerassistenzsystem 20 bestimmten Arbeitspunkt 27 einer aufgrund der vorgegebenen Sollwerte erreichbaren Verdichtbarkeit. In Fig. 4 ist das Kennlinienfeld 26 mit einer durch das Fahrerassistenzsystem 20 bestimmten Kennlinie 28 konstanter Verdichtbarkeit dargestellt. Die Darstellung des Kennlinienfeldes 26 in Fig. 4 zeigt den funktionalen Zusammenhang zwischen der Ausgangsgröße "Verdichtung" bzw. "Dichte der Frischmasse" und den Eingangsgrößen "relativer Trockenmassegehalt" und der "Schnittlänge". Wie aus dem Verlauf der Kennlinie 28 ersichtlich ist, lässt sich eine kontante Verdichtbarkeit bei einem geringen Trockenmassegehalt mit einer großen Schnittlänge realisieren. Mit zunehmendem Trockenmassegehalt im Erntegut reduziert sich die Schnittlänge, bei welcher eine kontante Verdichtbarkeit erreichbar ist.

Das zumindest eine Kennlinienfeld 26 wird von der Rechenvorrichtung 23 im laufenden Erntebetrieb auf den aktuellen Ernteprozesszustand fortlaufend abgeglichen, um Abweichungen zwischen den in dem Kennlinienfeld 26 abgebildeten Zusammenhängen und dem tatsächlichen Ernteprozesszustand zu bestimmen. Bei einer Abweichung wird das zumindest eine Kennlinienfeld 26 in einem rekursiven Verfahren auf den tatsächlichen Ernteprozesszustand abgeglichen und in dem Speicher 24 abgelegt.

Auf diese Weise wird den Einflussgrößen Rechnung getragen, die in einem laufenden Ernteprozess insbesondere die Schnittlänge beeinflussen können. Neben Schwankungen des Trockenmassegehalts des Erntegutes können auch Änderungen in der Bestandsdichte dazu führen, dass eine Anpassung der Schnittlänge erforderlich wird, um eine nahezu konstante Verdichtbarkeit auf dem Silo zu erreichen. Signifikante Änderungen der Bestandsdichte führen zu einer Erhöhung oder Verringerung des von dem Vorsatzgerät 2 aufgenommen Erntegutes. Insbesondere eine Verringerung der aufgenommenen Erntegutmenge führt dazu, dass die Einzugsvorrichtung eine Erntegutmatte geringer Dichte erzeugt. Um diese Quantitätsschwankungen auszugleichen, ist es bekannt, die Fahrgeschwindigkeit zu modifizieren, was durch eine entsprechende Ansteuerung des Fahrantriebs 16 erreicht wird.

Die Änderung der Schnittlänge im laufenden Erntebetrieb lässt sich durch eine Variation der Einzugsgeschwindigkeit der Einzugsvorrichtung 3 bewirken. Mit zunehmender Einzugsgeschwindigkeit der Einzugsvorrichtung 3 bei gleichbleibender Drehzahl der Häckseltrommel 7 wird die Schnittlänge des Erntegutes erhöht. Entsprechend verringert sich mit abnehmender Einzugsgeschwindigkeit bei gleichbleibender Drehzahl der Häckseltrommel 7 die Schnittlänge des Erntegutes.

Eine weitere Möglichkeit die Schnittlänge zu beeinflussen besteht darin, die Anzahl der Häckselmesser 8 auf der Häckseltrommel 7 zu variieren. Dies geschieht normalerweise vor einem Ernteeinsatz und muss entsprechend bei der Regelung der Schnittlänge berücksichtigt werden.

Einen weiteren Einflussfaktor stellt die Aufschichtung des zerkleinerten Erntegutes in einem Silo dar. Mit zunehmender Schichthöhe wird auf die unteren Schichten mit zerkleinertem Erntegut durch das Eigengewicht der darüber liegenden Schichten ein höherer Druck ausgeübt. Dies ermöglicht es, die Schnittlänge zu Beginn des Aufschichtens des zerkleinerten Erntegutes im Silo größer zu wählen, als zu einem späteren Zeitpunkt. Die Schnittlänge wird somit neben dem relativen Trockenmassegehalt zusätzlich in Abhängigkeit von der Schichthöhe oder Stapelhöhe in dem Silo angepasst, um eine nahezu konstante Verdichtbarkeit einzuhalten. Dieser zusätzliche Parameter, der die jeweilige Schicht- bzw. Stapelhöhe wiedergibt, kann von einem Verdichtungsfahrzeug, welches auf dem Silo bewegt wird, an den Feldhäcksler 1 oder die Feldhäcksler 1 übermittelt werden, der oder die ein Feld bearbeiten. Darüber hinaus besteht die Möglichkeit, eine an die Schichthöhe auf dem Silo angepasste Ziel-Verdichtbarkeit vorzugeben. Hierzu verfügt das Fahrerassistenzsystem 20 über eine Kommunikationsschnittstelle 24a, welche zum Empfang einer Vorgabe für die Ziel-Verdichtbarkeit durch ein, insbesondere mobiles, Datenverarbeitungsgerät eines anderen Prozessteilnehmers, wie dem Verdichtungsfahrzeug auf dem Silo eingerichtet ist.

In Fig. 5 ist das Kennlinienfeld der Verdichtung gemäß Fig. 3 dargestellt, in welchem mehrere beispielhafte Kennlinien 29a, 29b, 29c, 29d konstanter Verdichtbarkeit eingezeichnet sind. Die Bestimmung der Kennlinien 29a, 29b, 29c, 29d erfolgt wie weiter oben bereits beschrieben. Die Auswahl der jeweiligen Kennlinie 29a, 29b, 29c, 29d konstanter Verdichtbarkeit erfolgt in Abhängigkeit von einer strategischen Vorgabe durch die Bedienperson des Feldhäckslers 1 und/oder des Verdichtungsfahrzeugs auf dem Silo.

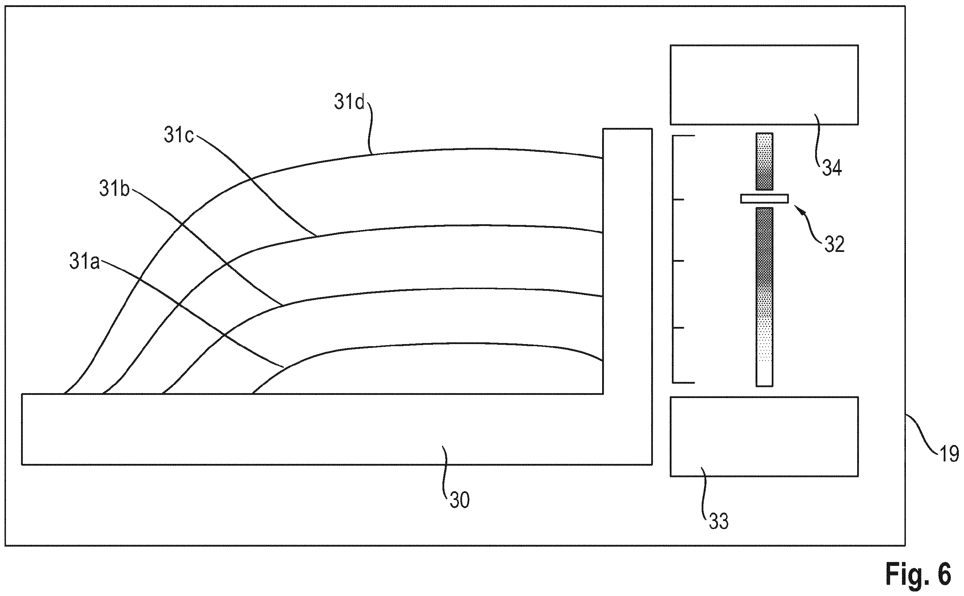

Die Darstellung in Fig. 6 zeigt schematisch eine Visualisierung eines Silos 30 mit unterschiedlichen Schichthöhen 31a, 31b, 31c, 31d zerkleinerten Erntegutes auf einem Bildschirm der Ein-/Ausgabevorrichtung 19. Diese Visualisierung kann analog auch auf einem mobilen Datenverarbeitungsgerät, wie beispielsweise einem Smartphone oder Tablet-PC, mittels einer geeigneten Applikation, einer sogenannten App, erfolgen. Weiterhin zeigt die Darstellung in Fig. 6 einen als virtuellen Schiebsteller 32 ausgeführtes Bedienelement, welcher zwischen zwei konträren strategischen Vorgaben, "Hohe Flächenleistung" 33 und "Hohe Verdichtbarkeit" 34 einer jeweiligen Ernteprozessstrategie verstellbar ist. Die Positionierung des virtuellen Schiebstellers 32 zwischen den beiden strategischen Vorgaben 33, 34 führt zu einer unterschiedlichen Gewichtung bei der Erreichung der jeweiligen strategischen Vorgaben 33, 34. Somit kann eine Ernteprozessstrategie zur Erreichung einer hohen Flächenleistung stärker priorisiert werden, was mit einer Einstellung einer großen Schnittlänge durch den Häckselautomaten einhergeht. Wird der Schiebsteller 32 in Richtung "Hohe Verdichtbarkeit" 34 verschoben, führt dies zu einer Einstellung einer kürzeren Schnittlänge. Somit kann eine Ernteprozessstrategie zur Erreichung einer hohen Verdichtbarkeit stärker priorisiert werden. Um dabei die nahezu konstante Verdichtbarkeit unter den bestehenden Erntebedingungen zu gewährleisten, wird die Kennlinie aus den Kennlinien 29a, 29b, 29c, 29d konstanter Verdichtbarkeit durch das Fahrerassistenzsystem 20 autonom ausgewählt, welche diese Anforderung erfüllt.

Mit Blick auf eine Vereinfachung der Abläufe bei der logistischen Planung kann seitens der Bedienperson des Verdichtungsfahrzeugs die strategischen Vorgabe 33, 34 vorgegeben und im Verlauf des Ernteprozesses angepasst werden. So kann die Bedienperson des Verdichtungsfahrzeugs zunächst die Vorgabe "Hohe Flächenleistung" 33 priorisieren, da bei geringer Schichthöhe 31a im Silo 30 größere Schnittlängen tolerierbar sind, auch bei höherem Trockenmassegehalt. Die Einstellung der Schnittlänge erfolgt dabei anhand einer der Kennlinien 29a, 29b, 29c, 29d konstanter Verdichtbarkeit, die im Speicher 24 des Fahrerassistenzsystems 20 hinterlegt sind und zyklisch angepasst werden. Im Verlauf des Aufschichtens kommt es daher dennoch zu einer ausreichend guten Verdichtung. Mit zunehmender Schichthöhe 31b, 31c wird die Bedienperson des Verdichtungsfahrzeugs die Gewichtung der strategischen Vorgabe von "Hohe Flächenleistung" 33 hin zu "Hohe Verdichtbarkeit" 34 verändern, um eine nahezu konstante Verdichtung auf dem Silo zu erreichen. Diese Änderungsinformation wird an den Feldhäcksler 1 übermittelt. Seitens der Bedienperson des Feldhäckslers 1 kann diese Änderung der strategischen Vorgabe 33, 34 bestätigt werden, um aktiv von dem Häckselautomaten umgesetzt zu werden. Denkbar ist hingegen auch, dass die Bedienperson des Feldhäckslers 1 lediglich über die Änderung der strategischen Vorgabe 33, 34 informiert wird, wenn der Häckselautomat aktiv ist.

Im Rahmen einer übergreifenden Kommunikation, insbesondere mittels eines Flottenmanagementsystems, zwischen den Prozessteilnehmern, d.h. dem wenigstens einen Feldhäcksler 1, den zwischen dem abzuerntenden Feld und dem Silo pendelnden Transportfahrzeugen sowie dem wenigstens einen Verdichtungsfahrzeug auf dem Silo, ist die Bedienperson des Verdichtungsfahrzeugs darüber informierbar, welches Transportfahrzeug gemäß der jeweiligen strategischen Vorgabe bearbeitetes zerkleinertes Erntegut anliefert. Die Bedienperson des Verdichtungsfahrzeugs wird somit darüber in Kenntnis gesetzt, zu welchem Zeitpunkt zerkleinertes Erntegut mit höherer Verdichtbarkeit, d.h. kürzerer Schnittlänge, das Silo erreicht. Dieses Erntegut kann entsprechend weiter oben, d.h. oberhalb einer höher gelegenen Schicht, im Silo aufgeschichtet werden.

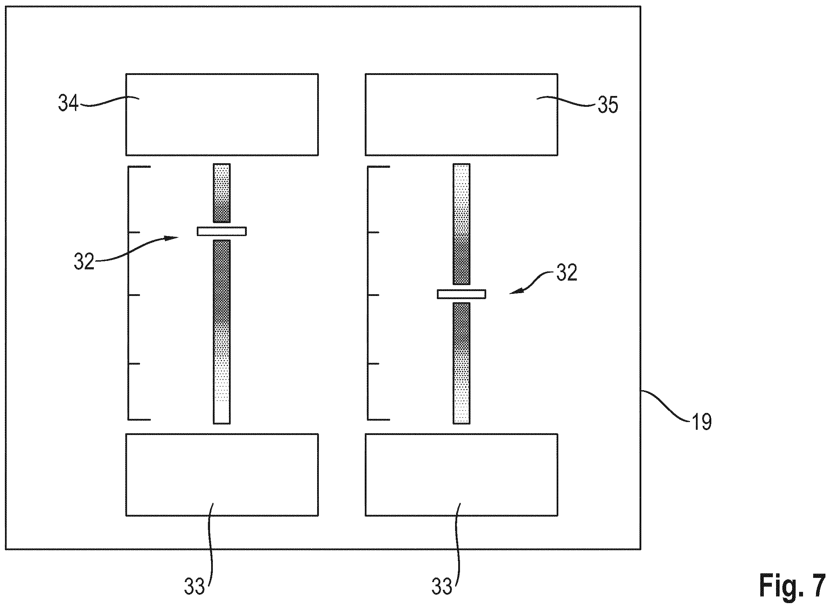

Die Darstellung gemäß Fig. 7 zeigt eine Menüoberfläche der Ein-/Ausgabevorrichtung 19 mit einer Visualisierung mehrerer Ernteprozessstrategien. Neben den strategischen Vorgaben "Hohe Flächenleistung" 33 und "Hohe Verdichtbarkeit" 34 einer ersten Ernteprozessstrategie ist eine weitere Ernteprozessstrategie dargestellt, welche als strategische Vorgaben "Hohe Flächenleistung" 33 und "Guter Kornaufschluss" 35 umfasst. Auch zwischen diesen beiden strategischen Vorgaben 33 und 35 ist ein als virtueller Schiebsteller 32 ausgeführtes Bedienelement vorgesehen, welcher zwischen den beiden konträren strategischen Vorgaben "Hohe Flächenleistung" 33 und "Guter Kornaufschluss" 35 eine Veränderung der Gewichtung bei deren Erreichung ermöglicht. Die Gewichtung beeinflusst den Grad der Erreichung der strategischen Vorgaben 33, 34, 35, wobei eine Verschiebung der Gewichtung hin zu "Hohe Flächenleistung" 33 und/oder "Guter Kornaufschluss" 35 mit einer Abnahme der erreichbaren Flächenleistung und einem zunehmenden Kraftstoffverbrauch einhergehen. So erhöht sich die Leistungsaufnahme der Nachbearbeitungsvorrichtung 10, wenn die Gewichtung in Richtung der strategischen Vorgabe 34 verschoben wird, was eine Reduzierung des Abstands des Walzenpaares bedeutet.

**Bezugszeichenliste**

| | | | |
|---|---|---|---|
| 1 | Feldhäcksler | 28 | Kennlinie |
| 2 | Vorsatzgerät | 29a | Kennlinie |
| 3 | Einzugsvorrichtung | 29b | Kennlinie |
| 4a | Walze | 29c | Kennlinie |
| 4b | Walze | 29d | Kennlinie |
| 5a | Walze | 30 | Virtuelles Silo |
| 5b | Walze | 31a | Schichthöhe |
| 6 | Häckselvorrichtung | 31b | Schichthöhe |
| 7 | Häckseltrommel | 31c | Schichthöhe |
| 8 | Häckselmesser | 31d | Schichthöhe |
| 9 | Gegenschneide | 32 | Virtueller Schiebsteller |
| 10 | Nachbearbeitungsvorrichtung | 33 | Strategische Vorgabe |
| 11 | Nachbeschleuniger | 34 | Strategische Vorgabe |
| 12 | Förderschacht | 35 | Strategische Vorgabe |
| 13 | Auswurfkrümmer | | |
| 14 | Antriebsvorrichtung | | |
| 15 | Riemenrieb | | |
| 16 | Fahrantrieb | | |
| 17 | Sensor | | |
| 18 | Kabine | | |
| 19 | Ein-/Ausgabevorrichtung | | |
| 20 | Fahrerassistenzsystem | | |
| 21 | Bussystem | | |
| 22 | Sensor | | |
| 23 | Rechenvorrichtung | | |
| 24 | Speicher | | |
| 25 | Aktuator | | |
| 26 | Kennlinienfeld | | |
| 27 | Arbeitspunkt | | |

## Patentansprüche

1. Selbstfahrender Feldhäcksler (1) mit einer Einzugsvorrichtung (3), einer Häckselvorrichtung (6), umfassend eine Häckseltrommel (7) mit Häckselmessern (8) und eine Gegenschneide (9) zum Zerkleinern von Erntegut, einem Fahrantrieb (16) sowie einem Fahrerassistenzsystem (20) zur Ansteuerung zumindest der Häckselvorrichtung (6), wobei das Fahrerassistenzsystem (20) einen Speicher (24) zum Hinterlegen von Daten und eine Rechenvorrichtung (23) zur Verarbeitung der in dem Speicher (24) hinterlegten Daten umfasst, wobei die Häckselvorrichtung (6) zusammen mit dem Fahrerassistenzsystem (20) einen Häckselautomaten bildet, indem die Rechenvorrichtung (23) dazu eingerichtet ist, eine auf einem Silo (30) erreichbare Verdichtung des zerkleinerten Erntegutes anhand von Erntegutparametern während eines Ernteprozesses fortlaufend zu bestimmen, um eine zu adaptierende Schnittlänge zur Beibehaltung einer nahezu konstanten Verdichtbarkeit auf dem Silo (30) autonom zu ermitteln und vorzugeben, wobei der Häckselautomat alle für die Einhaltung einer nahezu konstanten Verdichtbarkeit des Erntegutes zusammenwirkenden Arbeitsaggregate, d.h. die Betriebsparameter zumindest der Einzugsvorrichtung (3) und der Häckselvorrichtung (6), koordiniert, ohne das es eines Eingriffs von außen durch eine Bedienperson bedarf, **dadurch gekennzeichnet, dass** in dem Speicher (24) mehrere Ernteprozessstrategien (33, 34, 35) auswählbar hinterlegt sind und die Rechenvorrichtung (20) dazu eingerichtet ist, zur Umsetzung der jeweils ausgewählten Ernteprozessstrategie (33, 34, 35) mindestens einen die Schnittlänge beeinflussenden Betriebsparameter, Einzugsgeschwindigkeit der Einzugsvorrichtung (3), Drehgeschwindigkeit der Häckselvorrichtung (6) oder Fahrgeschwindigkeit des Fahrantriebs (16), autonom zu ermitteln und einem jeweiligen mit dem Betriebsparameter korrespondierenden Arbeitsaggregat vorzugeben.

2. Selbstfahrender Feldhäcksler (1) nach Anspruch 1, **dadurch gekennzeichnet, dass** der Verdichtung mindestens ein Kennlinienfeld (26) zugeordnet ist, und dass die Verdichtung als Ausgangsgröße des mindestens einen Kennlinienfeldes (26) definiert ist.

3. Selbstfahrender Feldhäcksler (1) nach Anspruch 2, **dadurch gekennzeichnet, dass** ein Parameter "Schnittlänge" und ein Parameter "relativer Trockenmassegehalt" die Eingangsgrößen für das mindestens eine Kennlinienfeld (26) sind.

4. Selbstfahrender Feldhäcksler (1) nach einem der Ansprüche 2 oder 3, **dadurch gekennzeichnet, dass** die Rechenvorrichtung (23) dazu eingerichtet ist, das mindestens eine Kennlinienfeld (26) im laufenden Erntebetrieb zyklisch auf einen aktuellen Ernteprozesszustand abzugleichen.

5. Selbstfahrender Feldhäcksler (1) nach einem der vorangehenden Ansprüche, **dadurch gekennzeichnet, dass** eine Ziel-Schnittlänge in Abhängigkeit von einem Erntegutparameter mittels einer Ein-/Ausgabevorrichtung (19) vorgebbar ist.

6. Selbstfahrender Feldhäcksler (1) nach Anspruch 5, **dadurch gekennzeichnet, dass** eine relative oder absolute Abweichung der Ziel-Schnittlänge mittels der Ein-/Ausgabevorrichtung (19) vorgebbar ist.

7. Selbstfahrender Feldhäcksler (1) nach einem der vorangehenden Ansprüche, **dadurch gekennzeichnet, dass** die Schnittlänge in Abhängigkeit von einer aktuellen Schichthöhe (31a, 31b, 31c, 31d) in dem Silo (30), die von einem Verdichtungsfahrzeug, welches auf dem Silo (30) bewegt wird, an den Feldhäcksler (1) übermittelt wird, anpassbar ist.

8. Selbstfahrender Feldhäcksler (1) nach einem der vorangehenden Ansprüche, **dadurch gekennzeichnet, dass** das Fahrerassistenzsystem (20) über eine Kommunikationsschnittstelle (24a) verfügt, welche zum Empfang einer Vorgabe für eine Ziel-Verdichtbarkeit durch einen anderen am Ernteprozess beteiligten Prozessteilnehmer eingerichtet ist.

9. Selbstfahrender Feldhäcksler (1) nach Anspruch 8, **dadurch gekennzeichnet, dass** die Ziel-Verdichtbarkeit in Abhängigkeit von einem aktuellen Füllstand in dem Silo (30) vorgebbar ist.

10. Selbstfahrender Feldhäcksler (1) nach einem der Ansprüche 1 bis 9, **dadurch gekennzeichnet, dass** der Häckselvorrichtung (6) eine Nachbearbeitungsvorrichtung (10) nachgeordnet ist, die gemäß einer auswählbaren Ernteprozessstrategie (33, 34, 35) betreibbar ist.

11. Selbstfahrender Feldhäcksler (1) nach einem der Ansprüche 1 bis 10, **dadurch gekennzeichnet, dass** die auswählbaren Ernteprozessstrategien (33, 34, 35) jeweils auf eine Zielvorgabe der Einstellung oder der Optimierung mindestens eines Ernteprozessparameters, nämlich Verdichtbarkeit, Kornaufschluss oder Flächenleistung, durch eine entsprechende Vorgabe des mindestens einen die Schnittlänge oder den Kornaufschluss beeinflussenden Betriebsparameters gerichtet sind.

12. Selbstfahrender Feldhäcksler (1) nach einem der Ansprüche 1 bis 11, **dadurch gekennzeichnet, dass** eine Ernteprozessstrategie (33, 34, 35) durch einen anderen am Ernteprozess beteiligten Prozessteilnehmer vorgebbar und an das Fahrerassistenzsystem (20) des Feldhäckslers (1) übertragbar ist.

13. Selbstfahrender Feldhäcksler (1) nach einem der Ansprüche 1 bis 12, **dadurch gekennzeichnet, dass** der Häckselautomat eine erste Kennlinie (28) konstanter Verdichtbarkeit verwendet, die von dem Fahrerassistenzsystem (20) entsprechend vorgebbarer Randbedingungen, Erntegutparameter und Ziel-Schnittlänge, der Ernteprozessstrategie anhand des Kennlinienfeldes (26) bestimmt wird.

14. Selbstfahrender Feldhäcksler (1) nach einem der Ansprüche 7 bis 13, **dadurch gekennzeichnet, dass** die Auswahl der jeweiligen Kennlinie (29a, 29b, 29c, 29d) konstanter Verdichtbarkeit in Abhängigkeit von einer strategischen Vorgabe durch die Bedienperson des Feldhäckslers 1 und/oder eines Verdichtungsfahrzeugs auf dem Silo (30).

## Claims

1. A self-propelled forage harvester (1) with a feed device (3), a chopping device (6) comprising a chopping drum (7) with chopping blades (8) and a counter cutter (9) for the comminution of harvested material, a propulsion unit (16) as well as a driver assistance system (20) for controlling at least the chopping device (6), wherein the driver assistance system (20) comprises a memory (24) for storing data and a computing device (23) for processing the data stored in the memory (24), wherein the chopping device (6) together with the driver assistance system (20) form an automated chopping system in which the computing device (23) is configured to continuously determine a compaction of the comminuted harvested material on a silo (30) which can be achieved on the basis of harvested material parameters acquired during a harvesting process in order to autonomously determine and to specify a cutting length to be adapted for maintaining an almost constant compressibility on the silo (30), wherein the automated chopping system coordinates all of the working groups, i.e. the operating parameters of at least the feed device (3) and the chopping device (6), which cooperate in order to maintain an almost constant compressibility of the harvested material without the need for external input from an operative, **characterized in that** a plurality of harvesting process strategies (33, 34, 35) are stored in the memory (24) in a selectable manner and in addition, in order to execute the respective selected harvesting process strategy (33, 34, 35), the computing device (20) is configured to autonomously determine an operating parameter which influences the cutting length, feed rate of the feed device (3), rate of rotation of the chopping device (6) or drive speed of the propulsion unit (16), and to specify a respective working group which corresponds to the operating parameter.

2. The self-propelled forage harvester (1) according to claim 1, **characterized in that** at least one performance map (26) is associated with the compaction, and **in that** the compaction is defined as the output variable for the at least one performance map (26).

3. The self-propelled forage harvester (1) according to claim 2, **characterized in that** the input variables for the at least one performance map (26) are a "cutting length" parameter and a "relative dry matter content" parameter.

4. The self-propelled forage harvester (1) according to claim 2 or claim 3, **characterized in that** the computing device (23) is configured to cyclically adjust the at least one performance map (26) to a current harvesting process state during the continuous harvesting operation.

5. The self-propelled forage harvester (1) according to one of the preceding claims, **characterized in that** a target cutting length which is dependent on a harvested material parameter can be specified by means of an input/output device (19).

6. The self-propelled forage harvester (1) according to claim 5, **characterized in that** a relative or absolute deviation from the target cutting length can be specified by means of the input/output device (19).

7. The self-propelled forage harvester (1) according to one of the preceding claims, **characterized in that** the cutting length can be adjusted as a function of a current layer depth (31a, 31b, 31c, 31d) in the silo (30) which is communicated to the forage harvester (1) from a compaction vehicle which is moved on the silo (30).

8. The self-propelled forage harvester (1) according to one of the preceding claims, **characterized in that** the driver assistance system (20) is provided with a communication interface (24a) which is configured to receive a specification for a target compressibility from another process participant involved in a harvesting process.

9. The self-propelled forage harvester (1) according to claim 8, **characterized in that** the target compressibility can be specified as a function of a current fill level in the silo (30).

10. The self-propelled forage harvester (1) according to one of claims 1 to 9, **characterized in that** a post-computing device (10) is disposed downstream of the chopping device (6) and can be operated in accordance with a harvesting process strategy (33, 34, 35) which can be selected.

11. The self-propelled forage harvester (1) according to one of claims 1 to 10, **characterized in that** the selectable harvesting process strategies (33, 34, 35) are respectively directed towards a target specification for the adjustment of or optimization of at least one harvesting process parameter, namely compressibility, corn cracking, or area output, by correspondingly specifying the at least one operating parameter which influences the cutting length or corn cracking.

12. The self-propelled forage harvester (1) according to one of claims 1 to 11, **characterized in that** a harvesting process strategy (33, 34, 35) can be specified by another process participant involved in the harvesting process and can be transmitted to the driver assistance system (20) of the forage harvester (1).

13. The self-propelled forage harvester (1) according to one of claims 1 to 12, **characterized in that** the automated chopping system uses a first characteristic (28) of constant compressibility which is determined by the driver assistance system (20) in correspondence with specifiable boundary conditions, harvested material parameters and target cutting length of the harvesting process strategy with the aid of the performance map (26).

14. The self-propelled forage harvester (1) according to one of claims 7 to 13, **characterized in that** the respective characteristic (29a, 29b, 29c, 29d) of constant compressibility is selected as a function of a strategic specification by the operator of the forage harvester (1) and/or of a compaction vehicle on the silo (30).

## Revendications

1. Ensileuse automotrice (1) comprenant un dispositif d'amenée (3), un dispositif de hachage (6) incluant un tambour hacheur (7) avec des couteaux de hachage (8) et une contre-lame (9) pour broyer du produit récolté, comprenant un groupe propulseur (16) ainsi qu'un système d'assistance à la conduite (20) pour commander au moins le dispositif de hachage (6), le système d'assistance à la conduite (20) incluant une mémoire (24) pour enregistrer des données et un dispositif de calcul (23) pour traiter les données enregistrées dans la mémoire (24), le dispositif de hachage (6) formant conjointement avec le système d'assistance à la conduite (20) un automate de hachage par le fait que le dispositif de calcul (23) est agencé pour, à l'aide de paramètres de produit récolté, déterminer en continu pendant un processus de récolte un compactage du produit récolté broyé atteignable sur un silo (30) afin de déterminer et de prescrire de manière autonome une longueur de coupe à adapter afin de conserver une compactabilité presque constante sur le silo (30), l'automate de hachage coordonnant tous les organes de travail coopérant au maintien d'une compactabilité presque constante du produit récolté, c'est-à-dire les paramètres d'exploitation au moins du dispositif d'amenée (3) et du dispositif de hachage (6), sans nécessiter d'intervention de l'extérieur par un opérateur, **caractérisée en ce que** plusieurs stratégies de processus de récolte (33, 34, 35) sont enregistrées de façon sélectionnable dans la mémoire (24), et le dispositif de calcul (20) est agencé pour, afin de mettre en œuvre la stratégie de processus de récolte respectivement sélectionnée (33, 34, 35), déterminer de manière autonome au moins un paramètre d'exploitation influençant la longueur de coupe, vitesse d'amenée du dispositif d'amenée (3), vitesse de rotation du dispositif de hachage (6) ou vitesse de marche du groupe propulseur (16), et le prescrire à un organe de travail respectif correspondant au paramètre d'exploitation.

2. Ensileuse automotrice (1) selon la revendication 1, **caractérisée en ce qu'**au compactage est associé un diagramme de courbes caractéristiques (26), et **en ce que** le compactage est défini comme grandeur de sortie du au moins un diagramme de courbes caractéristiques (26).

3. Ensileuse automotrice (1) selon la revendication 2, **caractérisée en ce qu'**un paramètre « longueur de coupe » et un paramètre « teneur relative en matière sèche » sont les grandeurs d'entrée pour le au moins un diagramme de courbes caractéristiques (26).

4. Ensileuse automotrice (1) selon une des revendications 2 ou 3, **caractérisée en ce que** le dispositif de calcul (23) est agencé pour adapter cycliquement au cours du fonctionnement au moins un diagramme de courbes caractéristiques (26) à un état instantané de processus de récolte.

5. Ensileuse automotrice (1) selon une des revendications précédentes, **caractérisée en ce qu'**une longueur de coupe de consigne est prescriptible en fonction d'un paramètre de produit récolté au moyen d'un dispositif d'entrée/sortie (19).

6. Ensileuse automotrice (1) selon la revendication 5, **caractérisée en ce qu'**un écart relatif ou absolu de la longueur de coupe de consigne est prescriptible au moyen du dispositif d'entrée/sortie (19).

7. Ensileuse automotrice (1) selon une des revendications précédentes, **caractérisée en ce que** la longueur de coupe est adaptable en fonction d'une hauteur de couche instantanée (31a, 31b, 31c, 31d) dans le silo (30), laquelle est transmise à l'ensileuse (1) par un véhicule de compactage qui est déplacé sur le silo (30).

8. Ensileuse automotrice (1) selon une des revendications précédentes, **caractérisée en ce que** le système d'assistance à la conduite (20) dispose d'une interface de communication (24a) qui est agencée pour recevoir une prescription pour une compactabilité de consigne par l'intermédiaire d'un autre participant au processus prenant part au processus de récolte.

9. Ensileuse automotrice (1) selon la revendication 8, **caractérisée en ce que** la compactabilité de consigne est prescriptible en fonction d'un niveau de remplissage instantané dans le silo (30) .

10. Ensileuse automotrice (1) selon une des revendications 1 à 9, **caractérisée en ce qu'**en aval du dispositif de hachage (6) est disposé un dispositif de post-traitement (10) qui est exploitable selon une stratégie de processus de récolte sélectionnable (33, 34, 35).

11. Ensileuse automotrice (1) selon une des revendications 1 à 10, **caractérisée en ce que** les stratégies de processus de récolte sélectionnables (33, 34, 35) sont dirigées vers un objectif de réglage ou d'optimisation au moins d'un paramètre de processus de récolte, à savoir compactabilité, éclatement des grains ou rendement de surface, par l'intermédiaire d'une prescription correspondante de la au moins une longueur de coupe ou du paramètre d'exploitation influençant l'éclatement des grains.

12. Ensileuse automotrice (1) selon une des revendications 1 à 11, **caractérisée en ce qu'**une stratégie de processus de récolte (33, 34, 35) est prescriptible par l'intermédiaire d'un autre participant au processus prenant part au processus de récolte et est transmissible au système d'assistance à la conduite (20) de l'ensileuse (1).

13. Ensileuse automotrice (1) selon une des revendications 1 à 12, **caractérisée en ce que** l'automate de hachage utilise une première courbe caractéristique (28) de compactabilité constante qui est déterminée par le système d'assistance à la conduite (20) à l'aide du diagramme de courbes caractéristiques (26) en fonction de conditions marginales prescriptibles, paramètres de produit récolté et longueur de coupe de consigne, de la stratégie de processus de récolte.

14. Ensileuse automotrice (1) selon une des revendications 7 à 13, **caractérisée en ce que** la sélection de la courbe caractéristique respective (29a, 29b, 29c, 29d) de compactabilité constante en fonction d'une prescription stratégique par l'intermédiaire de l'opérateur de l'ensileuse 1 et/ou d'un véhicule de compactage sur le silo (30) .
